# EUROPEAN PATENT APPLICATION

(11) **EP 4 501 277 A1**
(43) Date of publication of application: **05.02.2025**
(21) Application number: 23779026.6
(22) Date of filing: 20.02.2023
(51) Int. Cl.: A61C 13/097

(54) **SET OF ARTIFICIAL TEETH**

(30) Priority: 30.03.2022 JP 2022055852
(71) Applicant: GC Corporation, Sunto-gun, Shizuoka 410-1307 (JP)
(72) Inventor: KINOSHITA, Kazuhiro, Kasugai-shi, Aichi 486-0844 (JP); NAGATOMI, Yusuke, Kasugai-shi, Aichi 486-0844 (JP)
(74) Representative: Müller-Boré & Partner Patentanwälte PartG mbB
(86) International application number: PCT/JP2023/005979
(87) International publication number: WO 2023/188996

(57) **Abstract**

A group of artificial teeth including plural artificial teeth on each of upper and lower jaw sides, the upper and lower jaw sides being in an occlusal style based on a lingualized occlusion, wherein in artificial teeth belonging to posterior teeth parts among the plural artificial teeth on the upper and lower jaw sides, buccal convexity of artificial teeth on the upper jaw side is in a form of convexity suitable in the lingualized occlusion; in a centric occlusal position, a lingual cusp of each of the artificial teeth on the upper jaw side is fit in a central fossa of each of artificial teeth on the lower jaw side; a ratio represented by W₂/W₁ is 0.9 to 1.22 where W₁ is a width of a lingual cusp of one of the artificial teeth, the one corresponding to a first molar tooth on the upper jaw side, and W₂ is a width of a pit of one of the artificial teeth in a buccolingual direction, the one corresponding to a first molar tooth on the lower jaw side; and a ratio represented by Sₖ/Sⱼ is 0.85 to 0.95 where, when the artificial tooth corresponding to the first molar tooth on the lower jaw side is viewed from an occlusal surface, Sⱼ is an area surrounded by ridges of buccal and lingual edges that pass buccal and lingual cusp tips, and mesial and distal marginal ridges, and Sₖ is an area surrounded by an edge of the pit.

## Description

### [Technical Field]

The present disclosure relates to a group of artificial teeth which includes plural artificial teeth and is for making up dentures.

### [Background Art]

A lingualized occlusion is one form of the occlusion of a group of artificial teeth which has plural artificial teeth and make up dentures. In the lingualized occlusion, a group of artificial teeth is configured in such a way that only the lingual cusps of the maxillary posterior teeth come into contact with the mandibular posterior teeth in a maximal intercuspal position (centric occlusal position) and an eccentric occlusal position (lateral occlusal position; posture after a lateral sliding movement). This brings about effects such that: dentures are stabilized because this guides an occlusal force to the lingual side; masticatory efficiency is improved; and dentures can be prevented from tilting because this causes a lateral occlusal pressure to be applied by the median side. Therefore, the lingualized occlusion may be applied to, for example, patients requiring complete dentures who suffer from marked residual ridge resorption.

Patent literatures 1 and 2 disclose a group of artificial teeth which is applicable not only to a full-balanced occlusion, but also to a lingualized occlusion.

### [Citation List]

### [Patent Literature]

[Patent Literature 1] JP 2017-209406 A
[Patent Literature 2] Japanese Translation of PCT Application No. 2021-525592

### [Summary of Invention]

### [Technical Problem]

In the lingualized occlusion, only the lingual cusps of the maxillary posterior teeth are occluded with the central fossae of the mandibular posterior teeth. However, when general artificial teeth are arranged to form dentures that provide a lingualized occlusion, the problem such that the stability of the dentures decreases arises in addition to the problem of the deterioration in aesthetics because: it is necessary to incline the teeth axes for occluding only the lingual cusps of the maxillary posterior teeth, which results in the vicinities of the cusp tips on the maxillary buccal sides in the form of protruding to the buccal sides, and thus, the lateral surfaces on the buccal sides (convexities) are necessary to be shaved, which results in the vicinity of each cervical part on the maxillary buccal sides in a concave form, so that the vicinity has the lack of a convexity. In cases of an unstable jaw position and an unstable temporomandibular joint, the upper and lower positional relationship does not converge on one point, and thus, becomes unstable, which cannot be treated with artificial teeth of narrow occlusal surfaces, which is problematic.

An object of the present disclosure is to provide a group of artificial teeth which provides dentures with high stability in a lingualized occlusion.

### [Solution to Problem]

The present application discloses a group of artificial teeth having plural artificial teeth on each of upper and lower jaw sides, the upper and lower jaw sides being in an occlusal style based on a lingualized occlusion, wherein in artificial teeth belonging to posterior teeth parts among the plural artificial teeth on the upper and lower jaw sides, buccal convexity of artificial teeth on the upper jaw side is in a form of convexity suitable in the lingualized occlusion, in a centric occlusal position, a lingual cusp of each of the artificial teeth on the upper jaw side is fit in a central fossa of each of artificial teeth on the lower jaw side, a ratio represented by W₂/W₁ is 0.9 to 1.22 where W₁ is a width of a lingual cusp of one of the artificial teeth, the one corresponding to a maxillary first molar tooth, and W₂ is a width of a pit of one of the artificial teeth in a buccolingual direction, the one corresponding to a mandibular first molar tooth, and a ratio represented by Sₖ/Sⱼ is 0.85 to 0.95 where, when the artificial tooth corresponding to the mandibular first molar tooth is viewed from an occlusal surface, Sⱼ is an area surrounded by ridges of buccal and lingual edges that pass buccal and lingual cusp tips in the occlusal surface, and mesial and distal marginal ridges, and Sₖ is an area surrounded by an edge of the pit in the occlusal surface.

The group of artificial teeth may be configured in such a way that θ₂ - θ₁ is 15° to 32° where θ₁ is an angle formed by the lingual cusp of the artificial tooth corresponding to the maxillary first molar tooth, and θ₂ is an angle formed by inclination of the pit of the artificial tooth corresponding to the mandibular first molar tooth.

### [Advantageous Effects of Invention]

According to the present disclosure, a group of artificial teeth can provide dentures with high occlusal stability in a lingualized occlusion.

### [Brief Description of Drawings]

[Fig. 1] Fig. 1 is a front view of dentures 1 including a group of artificial teeth 10.
[Fig. 2] Fig. 2 shows an upper jaw A and a lower jaw B on the occlusal surfaces sides.
[Fig. 3] Fig. 3 shows the postures of artificial teeth 11A and artificial teeth 11B which belong to the posterior teeth parts in a centric occlusal position (Fig. 3(a)) and in a lateral occlusal position (Fig. 3(b)).
[Fig. 4] Fig. 4(a) illustrates buccal convexity of maxillary artificial teeth 11A belonging to a posterior teeth part in the present embodiment. Fig. 4(b) shows buccal convexity of maxillary artificial teeth belonging to a posterior teeth part in the conventional.
[Fig. 5] Fig. 5 illustrates a contact state of artificial teeth 11 belonging to posterior teeth parts in a centric occlusal position.
[Fig. 6] Fig. 6 illustrates a form of a maxillary artificial tooth 11A and a mandibular artificial tooth 11B which belong to the posterior teeth parts.
[Fig. 7] Fig. 7 illustrates a form of the mandibular artificial tooth 11B belonging to a posterior teeth part.

### [Description of Embodiments]

### [Group of Artificial Teeth]

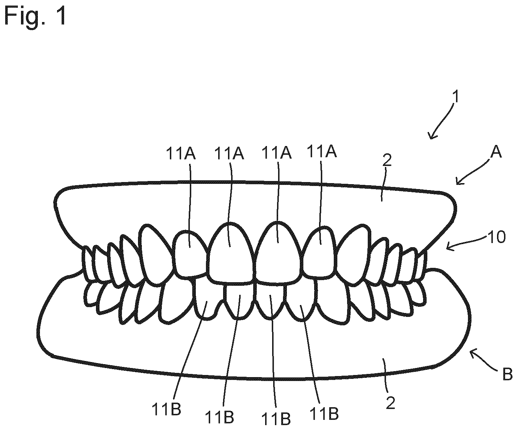

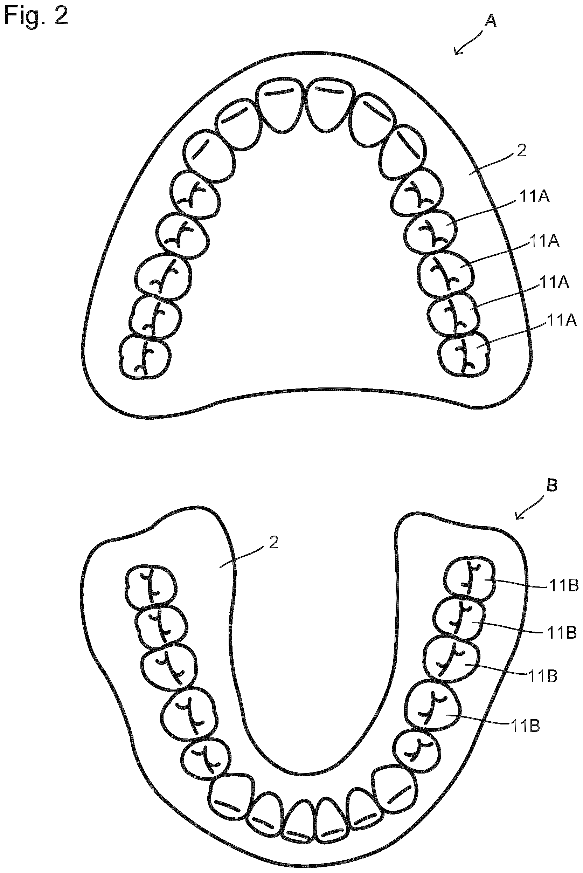

Fig. 1 is a front view of dentures 1 including a group of artificial teeth 10 according to one embodiment. Fig. 2 shows the dentures 1 separated into an upper jaw A (upper side in Fig. 2) and a lower jaw B (lower side in Fig. 2) on the occlusal surfaces sides.

As can be seen from these drawings, the group of artificial teeth 10 of the present disclosure comprises plural artificial teeth 11. In this embodiment, as the artificial teeth 11, artificial teeth corresponding to an anterior teeth part (a central incisor, a lateral incisor and a canine) and a posterior teeth part (a first premolar, a second premolar, a first molar, a second molar and a third molar) are included on each right and left side on each of the upper jaw A and the lower jaw B. The present disclosure is not limited to this as long as a part of them is included.

For distinguishing between the upper and lower jaws, when a part on the upper jaw side is described, the sign A is added thereto, and when a part on the lower jaw side is described, the sign B is added thereto (for example, an artificial tooth on the upper jaw side is expressed with 11A, and an artificial tooth on the lower jaw side is expressed with 11B).

The artificial teeth 11 are formed from a ceramic, or a synthetic resin, or a composite material thereof, and are fixed to denture bases 2 that are made from a resin and modeled on gingival parts.

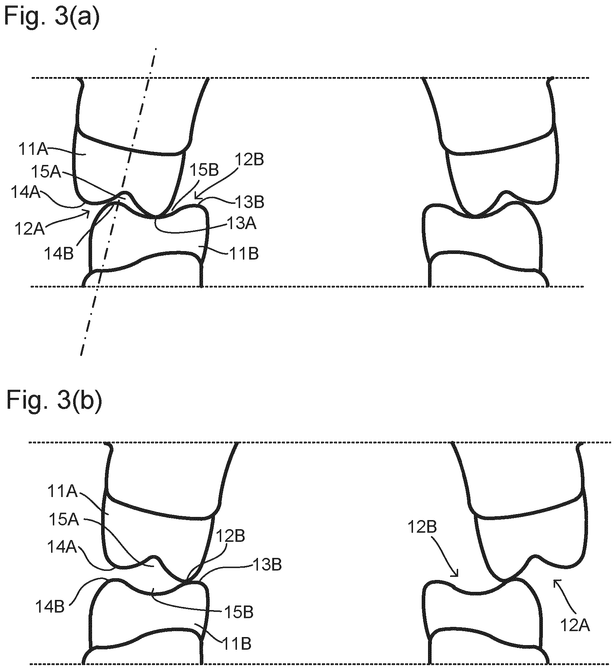

Fig. 3 schematically shows the occlusal condition of artificial teeth 11 belonging to the posterior teeth parts in a centric occlusal position (Fig. 3(a)), and the occlusal condition of the artificial teeth 11 belonging to the posterior teeth parts in a lateral occlusal position (Fig. 3(b)). As can be seen from Fig. 3, the group of artificial teeth 10 of the present embodiment are configured so that only lingual cusps 13A of maxillary artificial teeth 11A belonging to the posterior teeth parts come into contact with mandibular artificial teeth 11B belonging to the posterior teeth parts in a centric occlusal position and in a lateral occlusal position, that is, provides a lingualized occlusion.

The artificial teeth 11 included in the group of artificial teeth 10 of the present disclosure have the following structure.

Here, the artificial teeth 11 each have a rugged occlusal surface 12. On each posterior tooth, a convex lingual cusp 13, a convex buccal cusp 14, and a pit 15 that is the hollow between the lingual cusp 13 and the buccal cusp 14 are formed on this occlusal surface 12.

### <Aspect of Buccal Convexities>

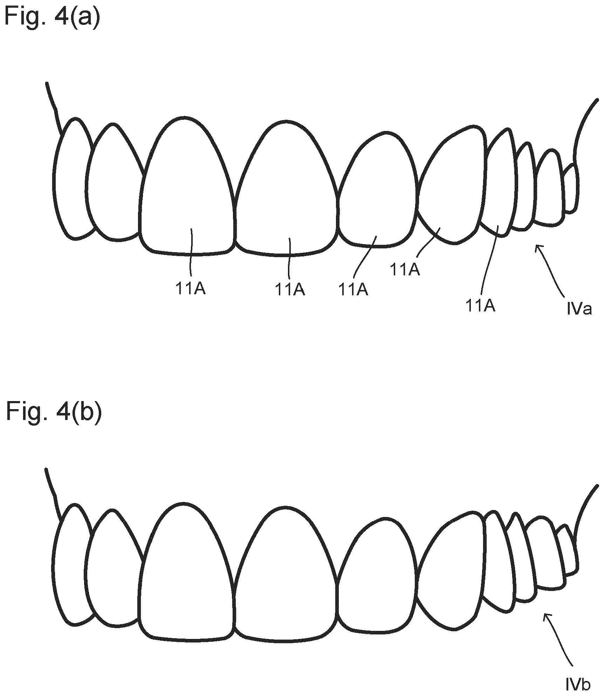

In a lingualized occlusion, as shown by the dashed dotted line in Fig. 3(a), it is necessary to incline the tooth axis of each maxillary artificial tooth 11A belonging to the posterior teeth parts in such a way that the closer to an occlusal surface 12A, the closer to the buccal side. In contrast, since cervicobuccal parts are in concave forms, patients feel uncomfortable on the maxillary buccal sides, and/or have some problem with the dentures in stability when the dentures degrade in marginal sealing property. Not only the problem on occlusion, but also a cosmetic problem because of bumps caused by the differences in the convexity from anterior teeth to posterior teeth as shown by IVb in Fig. 4(b) arises.

Conventional artificial teeth have problems as described above because it is necessary that the maxillary lingual cusps occlude, but the maxillary buccal cusps not occlude (be separate). The group of artificial teeth 10 of the present disclosure is designed to be suitable to be lingualized, and thus, as shown by IVa in Fig. 4(a), is configured to have a suitable buccal convexity in the condition of a lingualized occlusion.

According to this, the maxillary artificial teeth 11A belonging to the posterior teeth parts allow the buccal surfaces thereof to be expressed naturally from artificial teeth 11A belonging to the anterior teeth parts to enhance aesthetics. Such suitable convexities of the artificial teeth also contribute to marginal sealing. The sealed margin contributes to the suction of the dentures, and as a result, the stability of the dentures can be achieved.

### <Relation between Maxillary Cusps and Mandibular Pits>

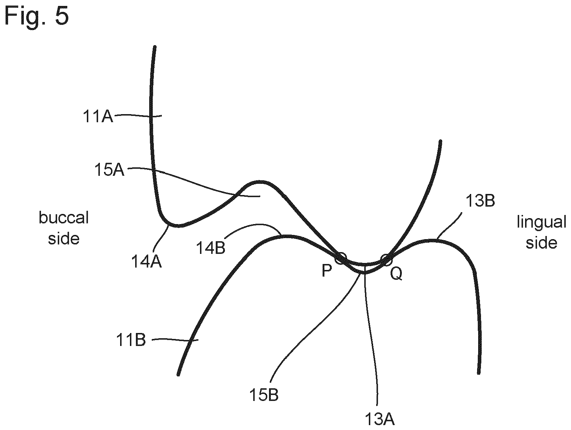

In the group of artificial teeth 10 of the present embodiment, the lingual cusp 13A of each of the maxillary artificial teeth 11A belonging to the posterior teeth parts comes into contact with the inner surface of a pit 15B of each of the mandibular artificial teeth 11B belonging to the posterior teeth parts at two or more parts in a centric occlusal position. Fig. 5 is an explanatory view. Fig. 5 shows the contact condition between a maxillary artificial tooth 11A and a mandibular artificial tooth 11B which belong to posterior teeth parts in a centric occlusal position.

As can be seen from Fig. 5, in a centric occlusal position, the lingual cusp 13A of the maxillary artificial tooth 11A belonging to a posterior teeth part comes into contact with the inner side of the central fossa in the pit 15B of the mandibular artificial tooth 11B belonging to a posterior teeth part at two parts of P and Q, which are at the inner side of the pit 15B of the mandibular artificial tooth 11B. This stably leads to a centric occlusal position, and thus, can achieve the stability of the dentures, and improve masticatory efficiency.

Here, the contact at the two parts P and Q has been described as an example. The contact may be at three or more parts. Either P or Q may be the tip of the lingual cusp 13A of the maxillary artificial tooth 11A, but P and Q may include no tip. Similarly, when the contact is at three or more parts, any one of the parts may include the tip, but the parts may include no tip of the lingual cusp 13A.

A conventional aspect is such that only the tip of the lingual cusp of each maxillary artificial tooth belonging to the posterior teeth parts comes into contact with the pit of each mandibular artificial tooth belonging to the posterior teeth parts in a lingualized occlusion.

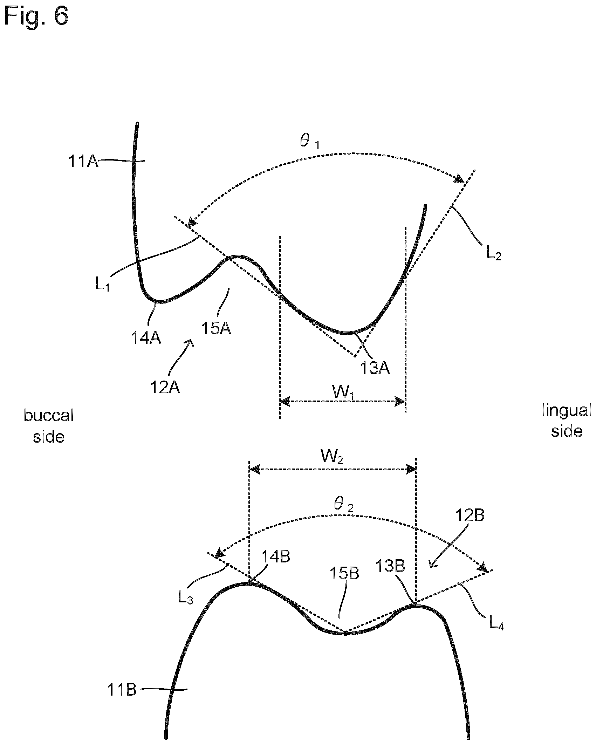

The occlusal surfaces have complex unevenness. Thus, a specific aspect for bringing the tip of the lingual cusp of each maxillary artificial tooth belonging to the posterior teeth parts into contact with the pit of each mandibular artificial tooth belonging to the posterior teeth parts at plural parts in a centric occlusal position is not particularly limited. As one approach among such aspects, the relation between a tip angle (θ₁) of the lingual cusp 13A of each of the maxillary artificial teeth 11A belonging to the posterior teeth parts, and an inclination angle (θ₂) of the pit 15B of each of the mandibular artificial teeth 11B belonging to the posterior teeth parts may be adjusted for the contact at plural parts as described above. Fig. 6 is an explanatory view. Fig. 6 is an exploded view of the maxillary artificial tooth 11A and the mandibular artificial tooth 11B of Fig. 5 with additional lines.

The tip angle θ₁ is the tip angle of the lingual cusp 13A of the maxillary artificial tooth 11A belonging to a posterior teeth part. The tip angle θ₁ is obtained from the angle formed by the line L₁ defined by the inner bevel of the lingual cusp, and the line L₂ defined by the outer bevel of the lingual cusp on an extracted cross section of the lingual cusp 13A of the target maxillary artificial tooth 11A.

In contrast, the inclination angle θ₂ is the angle showing the spread of the pit 15B of the mandibular artificial tooth 11B that is paired with the maxillary artificial tooth 11A having a tip angle of θ₁. The inclination angle θ₂ is obtained from the angle formed by the line L₃ defined by the inner bevel of the mandibular buccal cusp, and the line L₄ defined by the inner bevel of the mandibular lingual cusp on an extracted cross section of the pit 15B of the target mandibular artificial tooth 11B.

For bringing the tip of the lingual cusp of an artificial tooth corresponding to the first molar tooth of the upper jaw into contact with the pit of an artificial tooth corresponding to the first molar tooth of the lower jaw at plural parts in a centric occlusal position, θ₁ of the artificial tooth corresponding to the first molar tooth of the upper jaw and θ₂ of the artificial tooth corresponding to the first molar tooth of the lower jaw are such that θ₂ - θ₁ is 15° to 32°.

### <Buccolingual Distance>

In the group of artificial teeth 10 of the present embodiment, the distance between the tip of a buccal cusp 14B and the tip of a lingual cusp 13B in the pit 15B of each mandibular artificial tooth 11B belonging to the posterior teeth parts for the lingual cusp 13A of each maxillary artificial tooth 11A belonging to the posterior teeth parts is longer than that in a conventional group of artificial teeth which provides a lingualized occlusion. Fig. 6 includes the additional lines for the description.

As can be seen from Fig. 6, the ratio (W₂/W₁) of the distance W₁ that is the width of the lingual cusp of the artificial tooth 11A corresponding to the first molar tooth of the upper jaw, and the width W₂ of the pit 15B of the artificial tooth 11B corresponding to the first molar tooth of the lower jaw in the buccolingual direction (distance between the tip of the buccal cusp 14B and the tip of the lingual cusp 13B in the pit 15B of the artificial tooth 11B corresponding to the mandibular first molar tooth) is set in 0.9 to 1.22.

This makes it easy for the lingual cusp 13A of each maxillary artificial tooth 11A belonging to the posterior teeth parts to come to the inner side of the pit 15B of each mandibular artificial tooth 11B belonging to the posterior teeth parts even in the lateral movement(s) of (an) upper and/or lower jaw(s), tapping, etc., so that a stable occlusion can be obtained. In addition, the chewing cycle elongates, which can improve masticatory efficiency.

### <Opening of Mandibular Pit>

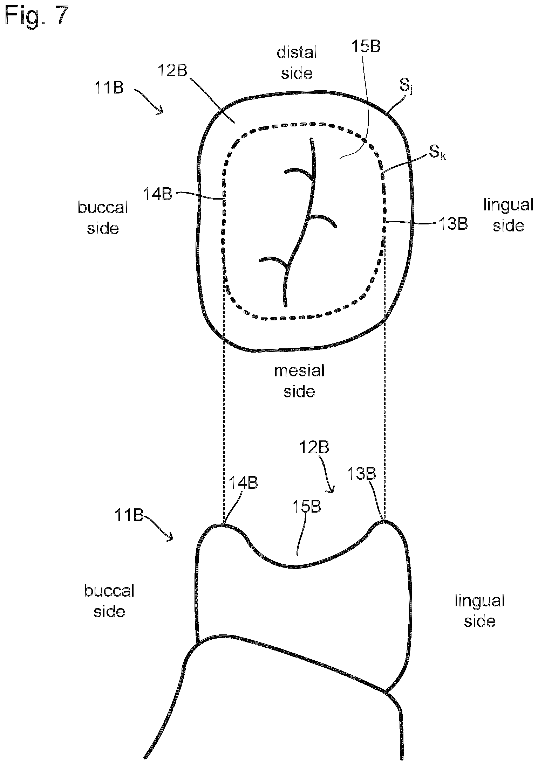

In the group of artificial teeth 10 of the present embodiment, the opening of the pit 15B of each mandibular artificial tooth 11B belonging to the posterior teeth parts is formed to be large. Fig. 7 is an explanatory view. Fig. 7 shows the mandibular artificial tooth 11B belonging to a posterior teeth part on the occlusal surface 12B side (top), and on the mesial side (bottom).

As can be seen from Fig. 7, in the present embodiment, the ratio (Sₖ/Sⱼ) of Sₖ to Sⱼ is set in 0.85 to 0.95 where Sⱼ is the area surrounded by the ridges of the buccal and lingual edges that pass the buccal and lingual cusp tips, and the mesial and distal marginal ridges, and Sₖ is the area inside the external margin of the pit 15B which is shown by the dotted line (line connecting the tips of the cusps) on the occlusal surface when the mandibular artificial tooth 11B is viewed on the occlusal surface 12B side.

This makes it easy for the lingual cusp 13A of each maxillary artificial tooth 11A belonging to the posterior teeth parts to enter the pit 15B of each mandibular posterior tooth 11B even in the lateral movement(s) of (an) upper and/or lower jaw(s), tapping, etc., so that a stable occlusion can be obtained. In addition, the chewing cycle elongates, which can improve masticatory efficiency.

### [Denture Base, Prosthesis, etc.]

The aforementioned group of artificial teeth can be provided as a group of artificial teeth. Other than this, the aforementioned group of artificial teeth can be provided as a prosthesis that is obtained by uniting the group of artificial teeth and a gingiva into one body and that has the shape of teeth which reproduces the inside of an oral cavity, and as a partial denture base or a denture base including the aforementioned combination of the upper and lower jaws of the group of artificial teeth. Any of these forms includes the group of artificial teeth of the present disclosure.

### [Reference Signe List]

1 dentures
10 group of artificial teeth
11 artificial teeth
12 occlusal surface
13 lingual cusp
14 buccal cusp
15 pit

## Claims

1. A group of artificial teeth having plural artificial teeth on each of upper and lower jaw sides, the upper and lower jaw sides being in an occlusal style based on a lingualized occlusion, wherein
in artificial teeth belonging to posterior teeth parts among the plural artificial teeth on the upper and lower jaw sides,
buccal convexity of artificial teeth on the upper jaw side is in a form of convexity suitable in the lingualized occlusion,
in a centric occlusal position, a lingual cusp of each of the artificial teeth on the upper jaw side is fit in a central fossa of each of artificial teeth on the lower jaw side,
a ratio represented by W₂/W₁ is 0.9 to 1.22 where W₁ is a width of a lingual cusp of one of the artificial teeth, the one corresponding to a first molar tooth on the upper jaw side, and W₂ is a width of a pit of one of the artificial teeth in a buccolingual direction, the one corresponding to a first molar tooth on the lower jaw side, and
a ratio represented by Sₖ/Sⱼ is 0.85 to 0.95 where, when the artificial tooth corresponding to the first molar tooth on the lower jaw side is viewed from an occlusal surface, Sⱼ is an area surrounded by ridges of buccal and lingual edges that pass buccal and lingual cusp tips, and mesial and distal marginal ridges in the occlusal surface, and Sₖ is an area surrounded by an edge of the pit in the occlusal surface.

2. The group of artificial teeth according to claim 1, wherein
θ₂ - θ₁ is 15° to 32° where θ₁ is an angle formed by the lingual cusp of the artificial tooth corresponding to the first molar tooth on the upper jaw side, and θ₂ is an angle formed by inclination of the pit of the artificial tooth corresponding to the first molar tooth on the lower jaw side.
